# EUROPEAN PATENT APPLICATION

(11) **EP 1 306 115 A2**
(43) Date of publication of application: **02.05.2003**
(21) Application number: 02380056.8
(22) Date of filing: 13.03.2002
(51) Int. Cl.: A63H 27/10

(54) **Latex free balloon and manufacturing process**

(30) Priority: 26.10.2001 ES 200102618 U
(71) Applicant: Tarazaga Carrasco, Juan José, 08230 Matadepera, Barcelona (ES)
(72) Inventor: Tarazaga Carrasco, Juan José, 08230 Matadepera, Barcelona (ES)
(74) Representative: Toro Gordillo, Ignacio Maria

(57) **Abstract**

This balloon comprises a first balloon sheet (12), a second balloon sheet (11) and a self-closing valve (2) fixed by means of a closing weld (3) establishing the peripheral joining of the first sheet (11) and the second sheet (12); forming a stem-free inflatable body. The valve (2) consists of two sheets (21, 22) of a multi-layer material at least consisting of one layer (n) of resilient material, with high barrier effect and punching resistance and by two layers (t) of heat-sealable material, conforming the inner and outer sides of each one of said sheets (21, 22). Internally, the valve has an unweldable covering area (27) superimposed with the closing weld (3); a portion (28) of the valve (2) protruding from the inflatable balloon body (1).

## Description

### Object of the Invention

The present invention refers to a latex free balloon of the type consisting of two or more flexible plastic sheets joined along their edges forming an inflatable body and a one-way laminar valve, defining in said body a mouth for inflation purposes.

### Background of the Invention

The popularity of latex free balloons is well known, all of them being manufactured with two or more flexible plastic sheets, which joined by the application of heat along their edges, form a body and a stem. To close it, besides the manual systems of tying, ringing, welding, pinching the balloon stem, etc. in order to avoid escape of gases, a large variety of self-closing valves are known, installed by depositing one part of them inside the balloon body and the rest of the valve is totally or partially located inside the balloon stem to protect said valve from possible damage caused when introducing the tool used for inflation.

Said valves are manufactured with single layer heat-sealable plastic sheets, generally polyethylene, which are easily damaged by punching or stretching when introducing the tool used to inflate balloons inside the valve. Likewise, inflation of the balloon in the area next to the weld joining the balloon and valve sheets produce a stress resulting in a stretching of all the sheets, causing an increase in porosity of the valve walls, provoking loss of gas and deflation of the balloon. To prevent this problem, a deflexion is created in said area to reduce stress, being ineffective on many occasions. Moreover, this change of balloon shape is anti-aesthetic. Also, it is impossible to tie the balloons to conventional valves to fasten them since said valves stretch and eventually break.

A previous relevant method to protect the valves is shown in US Patent number 4 917 646 to Garry Kieves, which uses a single layer low density polyethylene material of the "ELVAX 3120" type from DuPont, to manufacture the valve sheets by welding the valve inlet edges inside the stem to reinforce the inlet of said valve, also inserting the valve during the manufacturing process, by using the greater length of one of the valve sheets as a positioning platform, situating and locating the valve in one of the balloon sheets and welding the edge of the positioning platform to said balloon sheet, locating the other balloon sheet on the whole assembly and welding the whole assembly with the valve inside the two balloon sheets. Obviously, positioning and synchronising all these components is difficult, causing damage due to manufacturing failures, because with the slightest variation the valve inlet may become open to the exterior or blocked. Likewise, the valve size is conditioned by the stem measurements and hence, the speed of inflating the balloon.

Another prior relevant method corresponds to US Patent number 4 674 532 to Koyanagi, which shows a valve whose sheets are manufactured with single layer material, manually inserted between the already finished sheets of a balloon, welding the balloon walls with the valve inside at the end.

### Description of the Invention

To solve the aforementioned problems, a latex free balloon object of this invention has been created, having some specific features such as the incorporation of a multi-layer self-closing valve with high mechanical and punching resistance, in a stem free balloon, it being possible to use the valve as the balloon stem. The invention also includes the manufacturing method of the balloon itself.

The balloon object of the present invention, comprise a first balloon sheet with a heat-sealable inner side and a second one also with a heat-sealable inner side, which are fixed at their edges at least by means of a closing weld forming an inflatable body and a valve consisting of two sheets of equal length and width, both valve sheets having a valve inlet end, a valve outlet end and two lateral edges with heat-sealable inside and outer sides; said valve sheets being joined by some longitudinal welds and one of them having an unweldable covering area on its inner side.

According to the invention, the self-closing valve is fixed to the first balloon sheet and to the second one by means of a closing weld establishing the peripheral union of the first and second balloon sheet, said first and second balloon sheets forming a stem-free inflatable body.

In this balloon, a valve portion corresponding to the valve inlet protrudes from the inflatable body, the remaining valve portion corresponding to the valve outlet being arranged inside the inflatable body.

The unweldable covering area in the valve interior is superimposed with the closing weld, it being possible for the valve to form any angle with respect to the closing weld of the inflatable body.

One of the features of the invention is that the sheets forming the valve are of a multi-layer material, consisting of at least one layer of resilient material with high barrier effect and resistant to punching and by two heat-sealable material layers forming the inner and outer sides of each one of said valve sheets.

This self-closing valve formed with multi-layer material sheets, resists the stretching produced by the stresses caused when inflating the balloon, which may be exposed to the exterior without suffering damage, achieving easy access for balloon inflation since there are no obstacles for access of the inflation tool.

According to the invention, the multi-layer material sheets forming the valve are joined by two longitudinal welds affecting only one part of the longitudinal edges of the sheets, said welds extending from the ends of the valve outlet to an area which is clear of the valve inlet ends, without reaching them, the valve having a flat tubular body, whose access opening is distanced from the sheet inlet ends, corresponding to the end of the lateral welds, the valve being extended from the access opening in two small wings formed by the ends of the unwelded sheets.

To facilitate manufacture of the balloon object of the invention according to the method given below, it has been foreseen that the heat-sealable material layers corresponding to the inner sides of the multi-layer material sheets constituting the valve, have sliding characteristics to prevent their blocking when opposite each other during valve manufacture.

On the other hand, the heat-sealable material layers corresponding to the outer sides of multi-layer material sheets forming the valve have adhesive features, facilitating valve positioning on the inner side of one of the balloon sheets and its retention in the desired position without needing to use any additional fixing component, nor specific welds for this purpose, significantly simplifying the method and balloon manufacturing costs.

The manufacture of a stem free balloon with a multi-layer self-closing valve, incorporated in such a way that the outlet of said valve is inside the balloon body, between two sheets thereof, permits that said valve is welded to the balloon body by the same weld used to prepare said balloon, the valve inlet remaining outside the balloon body and moreover, it being possible to use the part of the valve outside the balloon body as a stem, since this valve has sufficient mechanical resistance for such a purpose.

The only conditioning factor existing in positioning of the valve with respect to the sheets forming the balloon body, is that the weld joining said balloon sheets to form the inflatable body, crosses the unweldable covering area inside the valve, preventing its blockage.

Another advantage of this balloon is that the self-closing valve may be placed in any part of the balloon body periphery and with any gradient, it not being necessary to position it with the precision required by other balloon types. Moreover, in this balloon the self-closing valve dimensions are not limited to the measurements of a balloon stem, permitting the valve to have the dimensions necessary for fast inflation.

The manufacturing method of the latex free balloon described above and formed by a balloon body, consisting of a first balloon sheet joined to a second balloon sheet and by a self-closing valve composed of two valve sheets joined by longitudinal welds, comprises the following steps:
a) superimposed arrangement of a first balloon sheet and a second balloon sheet, with the inner heat-sealable sides opposite to each other;
b) carrying out an opening in register in both sheets, in an area destined to locate the opening of the self-closing valve inlet;
c) separating the first and second balloon sheets;
d) positioning the self-closing valve of multi-layer material on the inner side of the first balloon sheet, such that a portion of the valve corresponding to the valve inlet is positioned over the hole, the valve being only retained in said position over the first balloon sheet by the own adherence of the material constituting the outside layer of the multi-layer material sheets forming the valve;
e) superimposing a second balloon sheet over a portion of the self-closing valve corresponding to the valve outlet and over the first balloon sheet, the holes coinciding with each other;
f) performing a closing weld on the balloon body with an electrode, joining the first balloon sheet, the second balloon sheet and the self-closing valve, such that the valve portion corresponding to the valve outlet is included inside the balloon body, a portion of the valve corresponding to the valve inlet remains outside said body, it being possible to be constituted as the balloon stem and that the closing weld crosses the unweldable covering area foreseen inside the valve, said closing weld preventing blocking of the valve, and
g) by means of an electrode, cutting the inflatable body contour delimited by the closing weld, with the desired shape and without affecting the self-closing valve.

### Brief Description of the Drawings

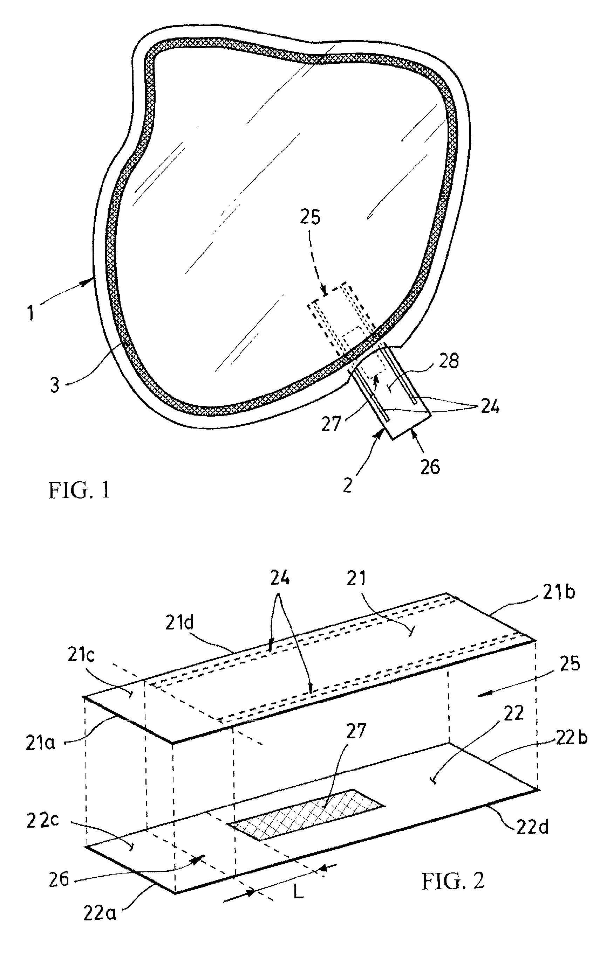

Figure 1 shows an embodiment of the latex free balloon object of the invention.
Figure 2 shows a schematic perspective view of the two sheets forming the valve separated, on one of them showing the two longitudinal welds and the other one showing the unweldable covering area.
Figure 3 shows a perspective view of the valve formed by the two sheets of the previous figure.
Figure 4 shows three embodiments of the multi-layer material forming the valve sheets.

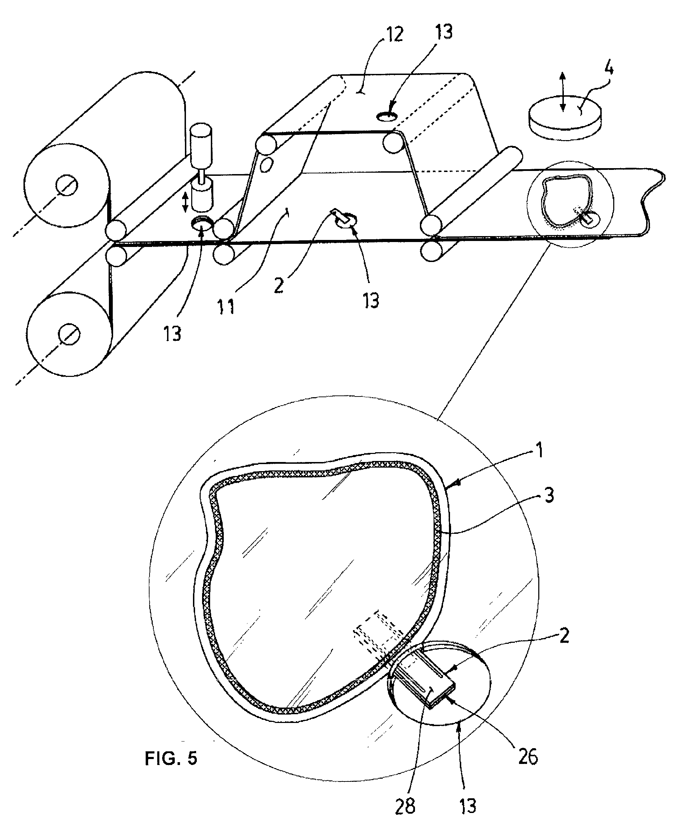

Figure 5 shows a diagram of the manufacturing method of the balloon shown in Figure 1.

### Preferred Embodiment of the Invention

The balloon shown in the attached embodiment comprises a balloon body (1) formed by a first sheet (11) with a heat-sealable inner side and a second balloon sheet (12) with a heat-sealable inner side and a valve (2), the sheets (11 and 12) and the valve (2) being fixed by a single weld (3) entrusted with closing the balloon body (1) defined by the mentioned sheets (11 and 12).

The valve (2) consists of two sheets (21 and 22) provided with inlet ends (21a and 22a), outlet ends (21b and 22b) and lateral edges (21d, 22d), the sheets (21 and 22) being joined by some longitudinal welds (24) extending from the outlet ends (21 b, 22b) to an area next to the inlet ends (21 a, 22a).

In correspondence with the outlet ends (21 b, 22b), valve (2) defines an outlet opening (25), and in communication with the inlet ends (21a, 22a) an inlet opening (26) with two small wings (21c, 22c) shaped by the unwelded sheet ends (21, 22).

One of the valve (2) sheets (22) has an unweldable covering area (27) inside, which is inserted with respect to the inlet opening (26) at a distance (L) and also inserted with respect to the outlet opening (25).

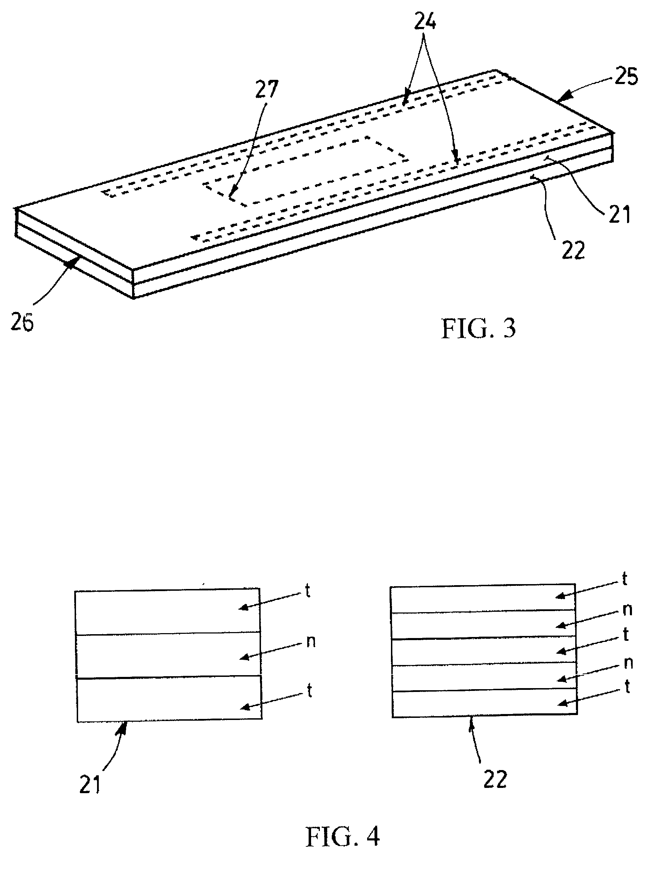

The sheets (21 and 22) constituting the valve (2) are of a multi-layer material. As shown in the embodiments of Figure 4, said multi-layer material consists of at least one layer (n) of resilient material, with a high barrier effect and resistance to punching and perforation, and by at least two layers (t) of heat-sealable material conforming the outer sides of said sheets (21, 22), providing them with a heat-sealable feature on both sides.

In a preferred embodiment, the layer or layers (n) of resilient material with a high barrier effect and resistance to punching and perforation will be composed of Nylon or bioriented polyester to achieve excellent mechanical properties.

Over the opposite sides of the layers (n), the layers (t) of heat-sealable plastic material are applied by lamination methods with adhesives, extrusion or any other method, using for such a purpose a low density linear polyethylene resin (LLDPE) mixed with a proportion of slipping additive (Erucamide) to obtain the different types of material necessary for each application. Hence, for the layer (t) corresponding to the outer sides of the valve (2), on requiring adhesive characteristics, the use of a ratio of 200 ppm (particles per million) has been foreseen of said slipping agent, obtaining a Friction coefficient of 0.50, using for the layers (t) corresponding to the inner sides of the sheets (21 and 22) of the valve, 1800 ppm (particles per million) of said additive, obtaining a friction coefficient of 0.20 due to the fact that slipping properties are required.

Likewise, during the manufacturing process, the static current suppressers are eliminated, such that the valves (2) manufactured with these sheets acquire highly self-adhesive properties on their outer sides and slipping properties on their inner sides to prevent the blocking thereof during the handling and rewinding processes ("blocking").

As shown in figure 6, in the manufacturing method of the latex free balloon (1), the first (11) and second sheets (12) of the balloon are superimposed, then making a hole (13) in them, in the area destined for location of the inlet opening (26) of the valve. Afterwards, the sheets (11 and 12) are separated, placing the valve (2) on the inner side of the first balloon sheet (11), such that a portion (28) of the valve corresponding to the inlet opening (26), remains located over the hole (13), only being retained in said position over the first balloon sheet (11) by the own adherence of the material constituting the outside surface of the valve (2).

Then, the second sheet (12) is located over a portion of valve (2) and over the first balloon sheet (11), again arranging the holes (13) in register with each other and the closing weld (3) is made joining the first balloon sheet (11), the second balloon sheet (12) and the valve (3). Once the weld (3) has been made, a portion of the valve corresponding to the outlet opening (25) remains inside the balloon body (1) and a portion (28) of the valve (2) corresponding to the inlet opening (26) remains outside the balloon body (1); the closing weld (3) crossing over the unweldable covering area (27) foreseen inside the valve (2), preventing said weld (3) from performing its sealing. Finally, cutting of the balloon body (1) contour is performed with an electrode (4), delimited by the closure weld (3), with the desired shape and without affecting the self-closing valve.

## Claims

1. A latex free balloon and manufacturing method, said balloon being of the type comprising a first balloon sheet (12) with a heat-sealable inner side and a second balloon sheet (11) with a heat-sealable inner side, fixed along its periphery at least by means of a closing weld (3), forming an inflatable body; and a self-closing valve (2) consisting of two sheets (21, 22) of equal length and width, both valve sheets having a valve inlet end (21a, 22a), a valve outlet end (21b, 22b) and two lateral edges (21d, 22d), their inner and outer sides being heat-sealable, said sheets (21, 22) being joined by some longitudinal welds (24) and one of them (22) having on its inner side, an unweldable covering area (27); **characterised in that** the self-closing valve (2) is fixed to the first balloon sheet (11) and to the second balloon sheet (12) by means of a closing weld (3) establishing the peripheral joining of the first (11) and second sheets (12); said first and second sheets (11, 12) forming a stem-free inflatable body; and **in that** a portion (28) of valve, corresponding to the valve inlet opening (26), protrudes from the inflatable balloon body (1), the remaining portion of the valve, corresponding to the outlet opening (25), being arranged inside the inflatable balloon body, and **in that** the unweldable covering area (27) is superimposed with the closing weld (3), the valve (2) being able to form any angle with respect to the closing weld (3) of the inflatable balloon body (1).

2. A balloon according to claim 1, **characterised in that** the sheets (21, 22) forming the valve (2) are of a multi-layer material, consisting of at least of one layer (n) of resilient material with a high barrier effect and resistance to punching, and by two layers (t) of heat-sealable material, conforming the inner and outer sides of each one of said valve sheets (21, 22).

3. A balloon according to the previous claims, **characterised in that** the sheets (21, 22) are joined by two longitudinal welds (24) affecting only one part of the longitudinal edges of the sheets (21, 22), said welds (24) extending from the outlet ends (21b, 22b) to an area at a certain distance from the inlet ends (21a, 22a) without reaching them, the valve having a flat tubular body, whose inlet opening (26) is distanced from the sheet inlet ends (21 a, 22a) and corresponding with the end of the lateral welds (24), the valve extending from the access opening (26) in two small wings (21c, 22c) shaped by the ends of the unwelded sheets (21, 22).

4. A balloon according to claim 2, **characterised in that** the layers (t) of heat-sealable material corresponding to the inner sides of the valve sheets (21, 22) have slipping properties.

5. A balloon according to claim 2, **characterised in that** the layers (t) of heat-sealable material corresponding to the outer sides of the valve sheets (21, 22) are of a material with adhesive properties.

6. A manufacturing method for latex free balloons, said balloon consisting of a balloon body (1), defined by a first balloon sheet (11) joined to a second balloon sheet (12) and by a self-closing valve consisting of two valve sheets (21, 22) joined by longitudinal welds (24), characterised because it comprises:
a) superimposed arrangement of a first balloon sheet (11) and a second balloon sheet (12) with the heat-sealable inner sides opposite each other;
b) carrying out an opening (13) in register in both sheets (11, 12), in an area destined to locate a portion (28) of the valve corresponding to the inlet opening (26);
c) separating the first balloon sheet (11) and the second balloon sheet (12);
d) positioning of the self-closing valve of multi-layer material over the inner side of the first balloon sheet (11), such that a portion (28) of the valve, corresponding to the valve inlet opening (26), remains positioned over the hole (13), only the valve (2) remaining retained in said position over the first balloon sheet (11) by the own adhesion of the material constituting the outside layer (t) of the multi-layer material sheets forming the valve (2);
e) superimposing the second balloon sheet over a portion of the self-closing valve, corresponding to the valve outlet and over the first balloon sheet, the holes (13) remaining in register;
f) performing a closing weld (3) with an electrode, joining the first balloon sheet (11), the second balloon sheet (12) and the self-closing valve (2), such that a valve portion corresponding to the valve outlet (25) remains inside the balloon body, that a portion (28) of the valve (2) corresponding to the valve inlet opening (26), remains outside the balloon body (1), constituting itself as a balloon (1) stem and that the closing weld (3) crosses the unweldable covering zone (27) foreseen inside the valve (2) preventing its blocking, and
g) cutting the inflatable body contour with an electrode (4), delimited by the closing weld (3), with the desired shape and without affecting the self-closing valve (2).
